# EUROPEAN PATENT APPLICATION

(11) **EP 3 683 489 A1**
(43) Date of publication of application: **22.07.2020**
(21) Application number: 19152328.1
(22) Date of filing: 17.01.2019
(51) Int. Cl.: F16M 11/14, F16M 11/20, F16C 11/06

(54) **LOCKABLE JOINT FOR A MEDICAL DEVICE**

(71) Applicant: TRUMPF Medizin Systeme GmbH + Co. KG, 07318 Saalfeld (DE)
(72) Inventor: TREMPERT, Alexander, Batesville, IN 47006 (US)
(74) Representative: Prüfer & Partner mbB Patentanwälte · Rechtsanwälte

(57) **Abstract**

A lockable joint (1) for a medical device has a center of rotation (2) and comprises a first component (3), a second component (5) partially encompassing the first component (3), and an urging element. One of the first and second component (3, 5) is deformable, and the other one of the first (3) and second component (3, 5) has a first contact area (12) contacting the one of the first and second component (3, 5). The first contact area (12) has first area elements at different distances from the center of rotation (2) in a plane of a rotation to be locked. The lockable joint (1) is configured to provide a positive connection between the first and second component (3, 5) when the first and second component (3, 5) are pushed to each other by the urging element such that the deformable component is deformed.

## Description

The invention relates to a lockable joint, in particular to a lockable joint for a medical device.

Lockable joints are often used for adjusting positions of medical devices with respect to other medical devices or with respect to stationary equipment, e.g., of a hospital. In particular, accessories, as, e.g., breathing hoses, are positioned by a holding device comprising a lockable joint to adjust the position of its end on a patient's side.

However, in the past, clamping of a lockable joint has often been executed by an uncertain force-locked connection by means of friction. Therefore, there has been the risk that the joint has not been sufficiently clamped so that the medical device moved which could have cause a risk for the patient. On the other hand, the joint has been clamped such tightly that it was merely hardly to be released.

Therefore, the object underlying the invention is to remedy the above-mentioned disadvantages and to provide a lockable joint which can safely and comfortably be operated.

The object is achieved by a lockable joint according to claim 1 and by a method according to claim 14. Advantageous further developments are subject-matters of the dependent claims.

According to an aspect of the invention, a lockable joint for a medical device has a center of rotation and comprises a first component, a second component partially encompassing the first component, and an urging element, wherein one of the first component and the second component is deformable as deformable component, and the other one of the first component and the second component has a first contact area contacting the one of the first component and the second component, wherein the first contact area has first area elements at different distances from the center of rotation in a plane of a rotation to be locked, and wherein the lockable joint is configured to provide a positive connection between the first and second component when the first and second component are pushed to each other by the urging element such that the deformable component is deformed.

By such a configuration of the lockable joint, the positive connection of the components of the joint is automatically provided in the plane of the rotation to be locked when the joint is locked. Therefore, as soon as the joint is locked such that a rotation of the joint in the plane of the rotation to be locked is impossible, the positive connection exists which ensures a rigid connection such that an element attached to the first component cannot move with respect to another element attached to the lockable joint. Furthermore, it is not necessary to exert an excessive clamping force for ensuring the rigid connection so that the locking of the joint can be released easily. Moreover, due to a reduced friction surface, the joint is adjustable more easily in an unlocked state.

In an advantageous implementation of the lockable joint, the first component comprises a ball, and the second component comprises a socket partially encompassing the ball.

By such a configuration, an arbitrary rotation of the first component with respect to the second component around the center of rotation is possible.

In another advantageous implementation of the lockable joint, the first component comprises a roll, and the second component comprises a socket partially encompassing the roll.

By this configuration, a guided rotation around one axis of the first component with respect to the second component around the center of rotation is possible.

In a further advantageous implementation of the lockable joint, the deformable first or second component comprises a hollow space.

Due to the provision of the hollow space, the deformation of the deformable component can be facilitated such that an urging force of the urging element can be reduced and, nevertheless, the positive connection is enabled. Furthermore, a weight of the joint is reduced.

According to a further advantageous implementation of the lockable joint, it further comprises an inlet configured to insert a fluid into the hollow space as the urging element for expanding the deformable first or second component.

When providing this inlet, the hollow space can be expanded and used for pushing the first and second component to each other without the need for providing an additional urging element.

In a further advantageous implementation of the lockable joint, it comprises a third component as the urging element.

By the provision of the third component as the urging element, exerting the urging force in a desired direction is easily possible also in case of the need of an enlarged urging force.

In a further advantageous implementation of the lockable joint, the third component has a second contact area having second area elements at different distances from the center of rotation in the plane of the rotation to be locked in a state when the deformable first or second component is deformed by the third component.

The provision of the second contact area having this characteristics is easier than providing the first or second component with such a contact area, in particular in case of retrofitting.

In a further advantageous implementation of the lockable joint, the deformable first or second component comprises a slit configured to enhance deformability of the deformable first or second component.

By providing the slit or, more advantageous, several slits, the deformability of the deformable component is enhanced so that the urging force for providing the positive connection can be reduced. Moreover, providing slits is an easy measure for this enhancement.

In a further advantageous implementation of the lockable joint, the lockable joint comprises an elastic sealing compound configured to close the slit.

When the slit is closed by an elastic sealing compound, hygienic conditions are improved since, in particular in a medical environment, germs or bacteria cannot enter into the slit. Due to the elastic characteristic, the sealing compound can follow the deformation of the deformable component.

In a further advantageous implementation of the lockable joint, the third component is provided with at least one of a mechanical, electromechanical, piezoelectric, hydraulic and pneumatic actuator.

By the provision of anyone of these actuators, a suitable actuation of the lockable joint depending on the case of application is possible.

In a further advantageous implementation of the lockable joint, at least one of the first and second contact area comprises a portion having a shape configured to provide a constant surface pressure between the portion and the deformed deformable component.

The contact area providing the constant surface pressure enables an optimized deformation of the deformable component to assist a further reduced clamping force.

In a further advantageous implementation of the lockable joint, at least one of the first and second contact area comprises a portion having an elliptic shape.

The elliptic shape of the portion of the contact area can be easily manufactured and has a large effect in deforming the deformable component.

In a further advantageous implementation of the lockable joint, the deformable component is configured to be elastically deformable.

When the deformable component is elastically deformable, after releasing the urging force, it returns to its original shape such that, e.g. in case of the ball or the roll, adjustment of the joint is easily possible.

In a further advantageous implementation of the lockable joint, a frictional connection between the first and second component is further provided.

By the additional provision of the frictional connection, the locking force of the lockable joint is further enhanced.

According to another aspect of the invention, a method for operating the lockable joint includes the steps actuating the urging element and, thereby pushing the first component and the second component to each other, and deforming the first component (3) or the second component (5) such that a positive connection is provided.

By this method, the positive connection of the components of the joint is automatically provided when the joint is locked. Therefore, as soon as the joint is locked such that a movement of the joint is impossible, the positive connection exists which ensures a rigid connection such that an element attached to the first component cannot move with respect to another element attached to the lockable joint. Furthermore, it is not necessary to exert an excessive clamping force for ensuring the rigid connection so that the locking of the joint can be released easily. Moreover, due to a reduced friction surface, the joint is adjustable more easily in an unlocked state.

Now, the invention is elucidated by means of embodiments referring to the attached drawings.

In particular,
- Fig. 1: shows a sectional view of a lockable joint according to a first embodiment of the invention in a released state;
- Fig. 2: shows a sectional view of the lockable joint according to the first embodiment of Fig. 1 in a locked state;
- Fig. 3: shows a sectional view of a lockable joint according to a second embodiment of the invention in a released state;
- Fig. 4: shows a sectional view of the lockable joint according to the second embodiment of Fig. 3 in a locked state;
- Fig. 5: shows an isometric exploded view of a lockable joint according to a third embodiment of the invention; and
- Fig. 6: shows a flowchart of a method according to the invention.

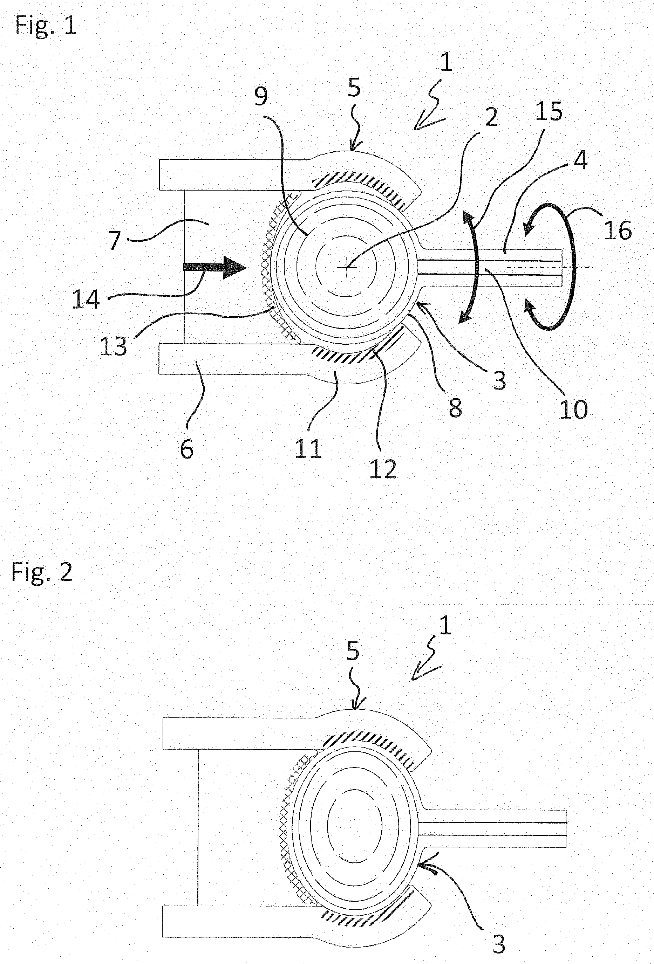

**Fig. 1** shows a sectional view of a lockable joint 1 according to a first embodiment of the invention in a released state. The lockable joint 1 has a center of rotation 2 and comprises a first component 3 and a second component 5 partially encompassing the first component 3. The first component 3 comprises a first attachment member 4 attachable to a first element. The second component 5 comprises a second attachment member 6 attachable to a second element. Furthermore, the lockable joint 1 comprises an urging element. The first element is, e.g., a fixture device for fixing an accessory part to a medical device and the second element is, e.g. the accessory part, as, e.g., a breathing hose. In an alternative embodiment, the second component 5 does not comprise the second attachment member 6.

The first component 3 comprising a ball 8 is elastically deformable. The ball 8 is made of steel; however, alternatively, the ball 8 is made of any other deformable material, as e.g. aluminum, or a synthetic material. In order to assist the deformability, the first component 3 comprises a hollow space 9. Furthermore, in the lockable joint 1, in particular, in this first embodiment, the first component 3 comprises an inlet 10 configured to insert a fluid into the hollow space 9 as one of the urging elements for expanding the deformable first component 3 which is made of steel. Alternatively, the deformable first component 3 is made of another suitable material, as e.g. aluminum, or a synthetic material.

The second component 5 comprises a socket 11 partially encompassing the ball 8 and having a first contact area 12 contacting the ball 8. The first contact area 12 has first area elements at different distances from the center of rotation 2 in a plane of a rotation to be locked. The first contact area 12 comprises a portion having a shape configured to provide a constant surface pressure between the portion and the deformed deformable component. In this first embodiment, the portion has an elliptic shape. Alternatively, depending on the shape of the deformable component, the portion has another shape which, as the case may be, provides the constant surface pressure.

A further one of the urging elements is formed as a third component 7. The third component 7 has a second contact area 13 having second area elements at different distances from the center of rotation 2 in the plane of the rotation to be locked in a state when the deformable first component is deformed by the third component by being pushed in a direction as indicated by arrow 14. In alternative embodiments, merely one of the hollow space 9 or the third component 7 is provided as the urging element or another kind of urging element is provided. Also alternatively, the second area elements are not at different distances from the center of rotation 2 in the plane of the rotation to be locked or the second contact area is provided with a portion having a shape configured to provide a constant surface pressure between the portion and the deformed deformable component.

The third component 7 is provided with a mechanical actuator as, in principle, illustrated by the arrow 14, for pushing the first and second component 3, 5 to each other. In alternative embodiments, an electromechanical, piezoelectric, hydraulic or pneumatic actuator is used.

The lockable joint 1 allows motions in three degrees of freedom as, in principle, illustrated by arrows 15, 16 around the center of rotation 2.

**Fig. 2** shows a sectional view of the lockable joint 1 according to the first embodiment of Fig. 1 in a locked state. As can be seen, the lockable joint 1 is configured to provide a positive connection between the first component 3 and the second component 5 when the first component 3 and the second component 5 are pushed to each other by the urging element such that the lockable joint is locked. Furthermore, a frictional connection between the first component 3 and the second component 5, in particular between a face of the ball 8 and the first contact area 12, is provided.

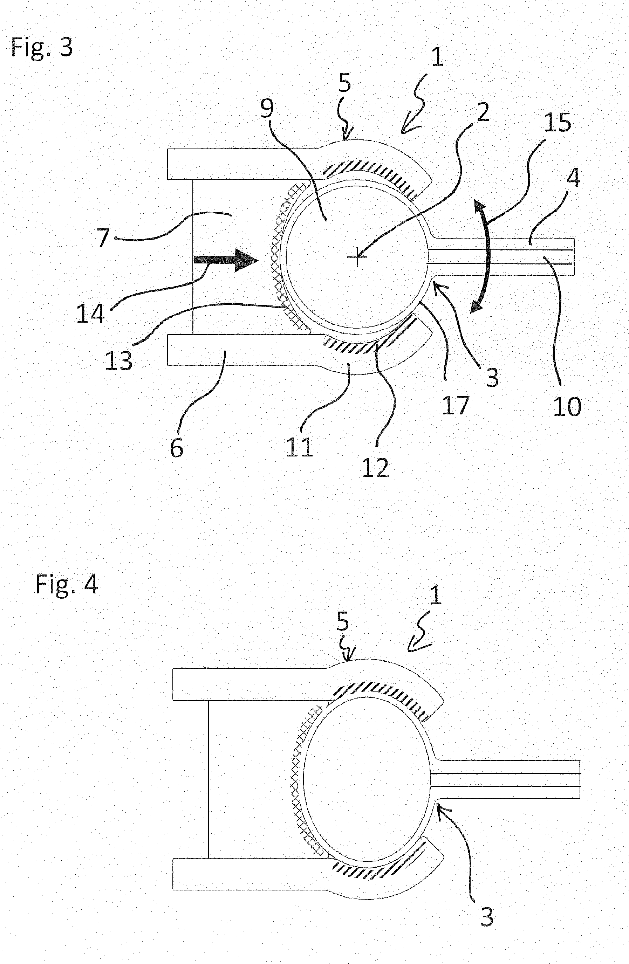

**Fig. 3** shows a sectional view of the lockable joint 1 according to a second embodiment of the invention in a released state and **Fig. 4** shows a sectional view of the lockable joint 1 according to the second embodiment of the invention in a locked state.

The second embodiment differs from the fist embodiment in that the first component 3 comprises a roll 17 and the second component 5 comprises a socket 11 partially encompassing the roll 17. Contrary to the first embodiment of Fig. 1 and Fig. 2, in the second embodiment, the lockable joint 1 allows a rotation around the center of rotation 2 in one degrees of freedom as, in principle, illustrated by arrow 15. The other features, in particular, denoted by the same reference signs, characteristics and alternative embodiments correspond to the embodiment of Fig. 1 and Fig. 2.

In an alternative embodiment with respect to the first and second embodiment, the second component 5 is deformable and the first component 3 has a contact area having area elements at different distances from the center of rotation 2 in the plane of the rotation to be locked. In this case, the second component 5 may have the hollow space in which the fluid for expanding the second component 5 can be inserted. In a further alternative embodiment, no hollow space is provided and the material and the wall thickness of the ball 8 or the roll 17 or of the socket 11 is adjusted for having the requested characteristic for being deformable but rigid enough for locking the lockable joint 1. In an alternative embodiment, the first component 3 or the second component 5, instead of being elastically deformable, is plastically deformable and a shape thereof changes when moving the first component with respect to the second component after releasing a locking of the lockable joint 1. In a further alternative embodiment, the first contact area does not comprise a portion having an elliptic shape but has another suitable shape for ensuring the area elements at different distances from the center of rotation. Also alternatively, the frictional connection between the first component 3 and the second component 5 is not provided.

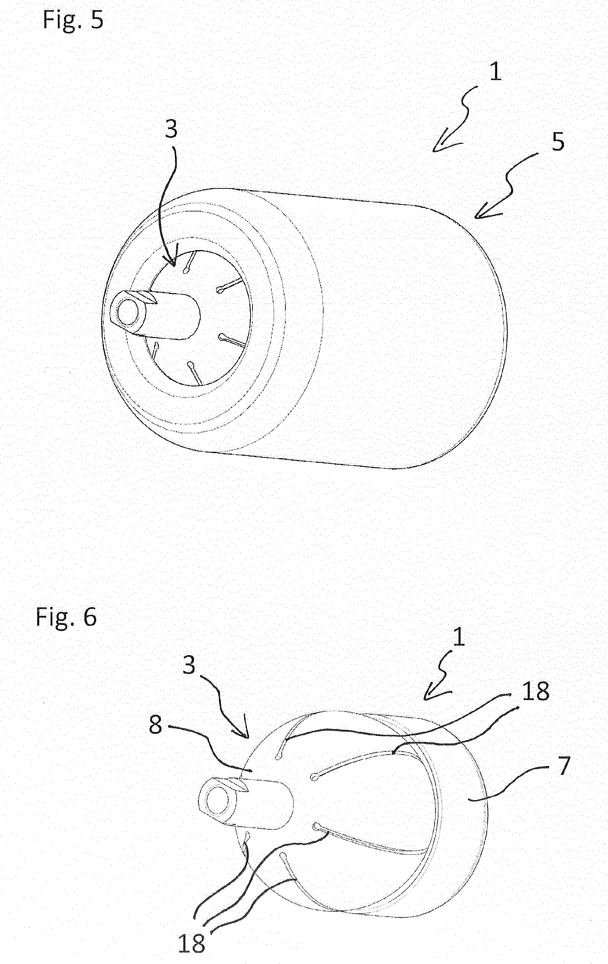

**Fig. 5** and **Fig. 6** show isometric views of members of a lockable joint 1 according to a third embodiment of the invention. Also this third embodiment comprises the first component 3, the second component 5 and the third component 7 as the urging element.

The third embodiment differs from the first embodiment in that the deformable first component comprises several slits 18 configured to enhance deformability of the deformable first component 3. As in the first embodiment, the first component 3 comprises the ball 8, wherein the ball 8 comprises the slits 18. In this embodiment, the slits 18 are cut with a laser in order to have a reduced width for enlarging the effective surface of the ball 8. In alternative embodiments, only one slit 18 is provided and or is provided by another manufacturing technique.

The lockable joint 1 comprises an elastic sealing compound configured to close the slits 18. In an alternative embodiment, if not necessary due to hygienic requirements, the elastic sealing compound are omitted.

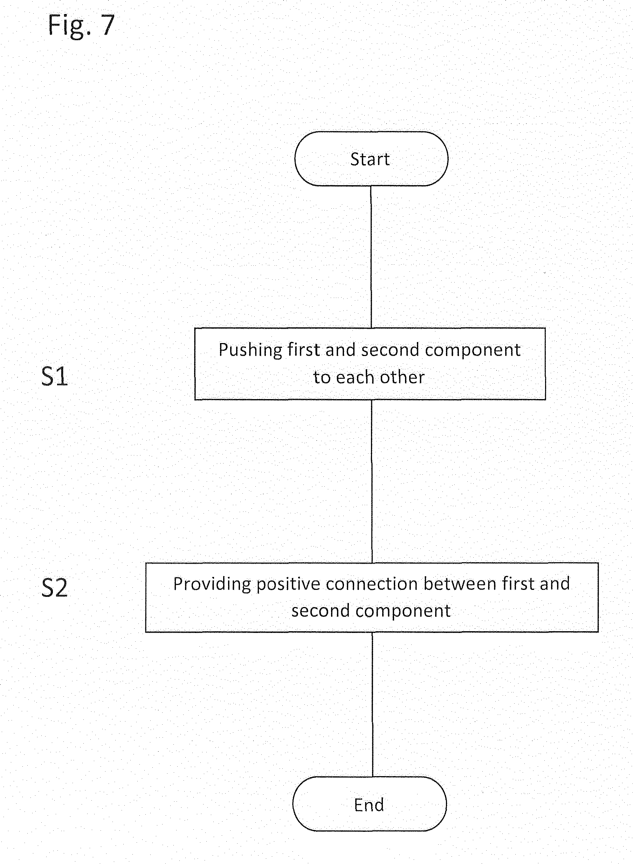

**Fig. 7** shows a flowchart of a method according to the invention. In use, after adjusting a position of the first and second attachment members 4, 6, the lockable joint 1 is locked. For locking, in step S1, the urging element, e.g., the third component 7, is actuated so that the first and second components 3, 5 are pushed to each other by the urging element. Thereby, in step 2, the deformable first component 3 is deformed such that its shape at least almost matches with the first contact area 12 of the second component 5 and, due to the different distances of the first area elements of the first contact area 12 from the center of rotation 2, a positive connection of the first component 3 and the second component 5 is provided.

For releasing the locking of the lockable joint 1, the third component 7 is moved to release a pushing force generating the pushing of the first and second components 3, 5 to each other. Thereby, due to the elastic characteristic of the second component 5, it returns to its ball or roll shape so that the first and second attachment members 4, 6 can be adjusted with respect to each other by the lockable joint 1.

While the invention has been illustrated and described in detail in the drawings and the foregoing description, such illustration and description are to be considered illustrative or exemplary and not restrictive. The invention is not limited to the disclosed embodiments. From reading the present disclosure, other modifications will be apparent to a person skilled in the art. Such modifications may involve other features, which are already known in the art and may be used instead of or in addition to features already described herein. In the claims, the word "comprising" does not exclude other elements or steps, and the indefinite article "a" or "an" does not exclude a plurality.

## Claims

1. A lockable joint (1) for a medical device, the lockable joint (1) having a center of rotation (2) and comprising:
a first component (3),
a second component (5) partially encompassing the first component (3) and, and
an urging element, wherein
one of the first component (3) and the second component (5) is deformable as a deformable component, and
the other one of the first component (3) and the second component (5) has a first contact area (12) contacting the one of the first component (3) and the second component (5), the first contact area (12) having first area elements at different distances from the center of rotation (2) in a plane of a rotation to be locked, and
wherein the lockable joint (1) is configured to provide a positive connection between the first component (3) and the second component (5) when the first component (3) and the second component (5) are pushed to each other by the urging element such that the deformable component is deformed.

2. The lockable joint (1) of claim 1, wherein
the first component (3) comprises a ball (8), and
the second component (5) comprises a socket (11) partially encompassing the ball (8).

3. The lockable joint (1) of claim 1, wherein
the first component (3) comprises a roll (17), and
the second component (5) comprises a socket (11) partially encompassing the roll (17).

4. The lockable joint (1) of one of claims 1 to 3, wherein
the deformable first or second component (3, 5) comprises a hollow space (9).

5. The lockable joint (1) of claim 4, further comprising an inlet (10) configured to insert a fluid into the hollow space (9) as the urging element for expanding the deformable first or second component (3, 5).

6. The lockable joint (1) of any preceding claim, further comprising
a third component (7) as the urging element.

7. The lockable joint (1) of claim 6, wherein
the third component (7) has a second contact area (13) having second area elements at different distances from the center of rotation (2) in state when the deformable first or second component (3, 5) is deformed by the third component (7).

8. The lockable joint (1) of claim 6 or 7, wherein
the deformable first or second component (3, 5) comprises a slit (18) configured to enhance deformability of the deformable first or second component (3, 5).

9. The lockable joint (1) of claim 8, wherein
the lockable joint (1) comprises an elastic sealing compound configured to close the slit (18).

10. The lockable joint (1) of anyone of claims 6 to 9, wherein
the third component (7) is provided with at least one of a mechanical, electromechanical, piezoelectric, hydraulic and pneumatic actuator (14).

11. The lockable joint (1) of any preceding claim, wherein
at least one of the first and second contact area (12, 13) comprises a portion having a shape configured to provide a constant surface pressure between the portion and the deformed deformable component.

12. The lockable joint (1) of any preceding claim, wherein
at least one of the first and second contact area (12, 13) comprises a portion having an elliptic shape.

13. The lockable joint (1) of any preceding claim, wherein
the deformable component is configured to be elastically deformable.

14. The lockable joint (1) of any preceding claim, further providing
a frictional connection between the first component (3) and the second component (5).

15. Method for operating a lockable joint (1) of any preceding claim, including the steps:
actuating the urging element and, thereby pushing the first component (3) and the second component (5) to each other; and
deforming the first component (3) or the second component (5) such that a positive connection is provided.
